# EUROPÄISCHE PATENTANMELDUNG

(11) **EP 4 183 925 A1**
(43) Veröffentlichungstag der Anmeldung: **24.05.2023**
(21) Anmeldenummer: 21209031.0
(22) Anmeldetag: 18.11.2021
(51) Int. Cl.: E01C 19/48

(54) **HEIZUNGSSYSTEM FÜR EINE BAUMASCHINE**

(71) Anmelder: Joseph Vögele AG, 67067 Ludwigshafen (DE)
(72) Erfinder: FLEISCHER, Bastian, 68753 WAGHÄUSEL (DE); ERDTMANN, Bernhard, 68535 Edingen Neckarhausen (DE)
(74) Vertreter: Grünecker Patent- und Rechtsanwälte PartG mbB

(57) **Zusammenfassung**

Ein Heizungssystem (13) für ein beheizbares Arbeitsaggregat einer Baumaschine (1) weist einen oder mehrere Heizkreise (14) mit jeweils mindestens einem elektrischen Heizelement (15) sowie einen Heizverteiler (HV) auf, wobei der Heizverteiler (HV) konfiguriert ist zum Verteilen von Drehstrom auf den einen oder die mehreren Heizkreise. Das Heizungssystem(13) umfasst eine Schaltvorrichtung (16), die dazu eingerichtet ist, den Heizverteiler (HV) in einer ersten Schaltstellung mit einer internen Stromquelle (12) der Baumaschine (1) und in einer zweiten Schaltstellung mit einem Stromanschluss (17) zur Verbindung mit einer externen Stromquelle (E) zu verbinden.

## Beschreibung

Die Erfindung bezieht sich auf ein Heizungssystem für ein beheizbares Arbeitsaggregat einer Baumaschine gemäß dem Oberbegriff des Anspruchs 1.

Aus der DE 199 12 248 und der zugehörigen US 6,421,594 B1 geht ein Heizungssystem zum Beheizen der Einbaubohle eines Straßenfertigers hervor. Dieses Heizungssystem umfasst mehrere Heizkreise, die jeweils ein oder mehrere auf der Einbaubohle angeordnete elektrische Heizelemente aufweisen. Eine Heizungs-Management-Sektion sorgt über die Ansteuerung von Schaltern für das Verteilen des von einem Generator erzeugten Stroms auf die Heizkreise.

Die Aufgabe der vorliegenden Erfindung besteht darin, die Möglichkeiten zur Nutzung eines Heizungssystems für ein Arbeitsaggregat einer Baumaschine zu erweitern. Diese Aufgabe wird gelöst durch ein Heizungssystem mit den Merkmalen des Anspruchs 1, durch eine Einbaubohle mit den Merkmalen des Anspruchs 7, durch eine selbstfahrende Baumaschine mit den Merkmalen des Anspruchs 8 oder durch ein Verfahren mit den Merkmalen des Anspruchs 11. Vorteilhafte Weiterbildungen der Erfindung sind in den abhängigen Ansprüchen angegeben.

Die Erfindung zeichnet sich aus durch eine Schaltvorrichtung, die dazu eingerichtet ist, den Heizverteiler in einer ersten Schaltstellung mit einer internen Stromquelle der Baumaschine (beispielsweise einem elektrischen Generator) und in einer zweiten Schaltstellung mit einem Stromanschluss zur Verbindung mit einer externen Stromquelle zu verbinden. Dabei kann, aber muss die interne Stromquelle nicht selbst Teil des erfindungsgemäßen Heizungssystems sein. Wichtig ist lediglich, dass das Heizungssystem die Schaltvorrichtung aufweist, die zwischen der ersten und der zweiten Schaltstellung umschaltbar ist. Denn dies ermöglicht es, das Heizungssystem in zwei verschiedenen Betriebsarten zu betreiben: In einer ersten Betriebsart wird das Heizungssystem mit elektrischer Energie von einer internen Stromquelle der Baumaschine versorgt. Dies kann der Fall sein, wenn sich die Baumaschine oder das betreffende Arbeitsaggregat in einem Arbeits-Modus befinden und die interne Stromquelle (z.B. der elektrische Generator) der Baumaschine in Betrieb ist, beispielsweise angetrieben durch einen Motor (wie einen Verbrennungsmotor) der Baumaschine. Dieser Motor kann optional auch weitere Funktionen haben und beispielsweise zum Antreiben eines Fahrwerks der Baumaschine dienen.

In einer zweiten Betriebsart kann das Heizungssystem von einer externen Stromquelle mit elektrischer Energie versorgt werden, sofern diese externe Stromquelle mit dem Stromanschluss des Heizungssystems verbunden ist. Dabei bedeutet "extern", dass die Stromquelle nicht nur außerhalb des Heizungssystems sondern auch außerhalb des Arbeitsaggregats und sogar außerhalb der Baumaschine liegen kann. Beispielsweise kann es sich bei der externen Stromquelle um ein externes Stromaggregat, einen externen Energiespeicher oder eine Ladesäule eines Energieversorgers handeln.

Allgemein gesprochen ist der Heizverteiler in der ersten Schaltstellung mit einer internen Stromquelle der Baumaschine verbunden - d.h. mit einer Stromquelle, die sich an oder in der Baumaschine befindet. Statt mit einem Generator kann der Heizverteiler in der ersten Schaltstellung der Schaltvorrichtung z.B. mit einer Batterie oder einem Akkumulator als interner Stromquelle verbunden sein. Das Heizungssystem kann z.B. einen, zwei, drei, vier oder fünf Heizkreise aufweisen.

Der Vorteil der Erfindung liegt darin, dass das Heizungssystem flexibler als konventionelle Heizungssysteme einsetzbar ist. Insbesondere ermöglicht es das Beheizen des Arbeitsaggregats der Baumaschine nicht nur in einem Zustand, in dem die elektrische Energie von der internen Stromquelle der Baumaschine zur Verfügung gestellt wird, sondern das Heizsystem ermöglicht einen ganz neuen Betriebszustand, in dem das Arbeitsaggregat von einer externen Stromquelle mit elektrischer Energie versorgt wird, beispielsweise beim Transport des Arbeitsaggregats oder der Baumaschine oder anderen Betriebszuständen, in denen die primäre, interne Stromquelle nicht zur Verfügung steht oder aus Effizienzgründen nicht genutzt werden soll.

Zur Klarstellung: Auch wenn das Heizungssystem im Kontext der Erfindung um die interne Stromquelle auf der Baumaschine erweitert werden kann, gehören weder die interne Stromquelle der Baumaschine noch die externe Stromquelle zum Heizungssystem im engeren Sinne. Als wichtige Bestandteile umfasst das Heizungssystem vielmehr einen oder mehrere Heizkreise, einen Heizverteiler, eine Schaltvorrichtung und den Stromanschluss, über den das Heizungssystem mit einer externen Stromquelle verbunden werden könnte.

Der Stromanschluss kann vorzugsweise ein Drehstrom-Stecker oder eine DrehstromSteckdose sein, d.h. ein Anschluss für Drehstrom. Solche Anschlüsse werden auch als Starkstrom-Anschlüsse bezeichnet. Sie bieten den Vorteil, besonders große Ströme übertragen zu können.

In einer Variante der Erfindung ist der Heizverteiler in der zweiten Schaltstellung der Schaltvorrichtung elektrisch von der internen Stromquelle der Baumaschine getrennt. Dies hat den Vorteil, dass die interne Stromquelle ohne jegliche Belastung durch das beheizbare Arbeitsaggregat ist. Wenn es sich bei der internen Stromquelle der Baumaschine um einen Generator handelt, könnte der Generator oder sogar der zu seinem Betrieb eingerichtete Motor in dieser zweiten Schaltstellung sogar abgeschaltet werden, ohne den Betrieb des Heizungssystems zu beeinträchtigen.

Zweckmäßig ist es, wenn das Heizungssystem eine Heizungssteuerung aufweist. Die Heizungssteuerung kann beispielsweise dazu eingerichtet sein, zur Leistungsbegrenzung für einen taktweisen Betrieb der Heizkreise und/oder einzelner Heizelemente zu sorgen.

Zweckmäßig ist die Heizungssteuerung in der ersten Schaltstellung der Schaltvorrichtung mit der internen Stromquelle der Baumaschine und in der zweiten Schaltstellung der Schaltvorrichtung mit dem Stromanschluss verbunden. Dies ermöglicht es, dass die Heizungssteuerung unabhängig von der Schaltstellung der Schaltvorrichtung stets ausreichend mit elektrischer Energie versorgt wird.

In einer Variante der Erfindung ist zwischen dem Stromanschluss und der Heizungssteuerung ein Netzgerät angeordnet. Dieses Netzgerät kann dazu eingerichtet sein, die Spannung des über den Stromanschluss bezogenen, externen Stroms auf die für die Heizungssteuerung optimale Betriebsspannung herunterzuregeln, beispielweise von 380V oder 400V auf 12V oder 24V. Das Zwischenschalten eines solchen Netzgeräts hat den Vorteil, dass in der zweiten Schaltstellung, d.h. bei Bezug von elektrischer Energie an der externen Stromquelle, keine elektrische Leistung von einer Batterie der Baumaschine für den Betrieb der Heizungssteuerung erforderlich ist.

Die interne Stromquelle der Baumaschine kann, wie eingangs erläutert, z.B. ein Generator oder eine Batterie sein. Es können auch mehrere interne Stromquellen vorhanden sein, beispielsweise ein Generator und zusätzlich eine Batterie (Akkumulator), so dass der Heizverteiler in der ersten Schaltstellung wahlweise mit einer der internen Stromquellen verbunden werden kann. Alternativ kann die Schaltvorrichtung mindestens drei Schaltstellungen aufweisen, wobei sie in einer Schaltstellung mit dem Stromanschluss zur Verbindung mit der externen Stromquelle verbunden ist und in den weiteren Schaltstellungen wahlweise mit verschiedenen internen Stromquellen der Baumaschine verbunden ist. Sind als interne Stromquelle ein Generator und zusätzlich eine Batterie vorgesehen, so ist es denkbar, dass die Batterie durch den Generator aufladbar ist.

Die Erfindung bezieht sich auch auf eine Einbaubohle für einen Straßenfertiger, wobei die Einbaubohle ein als Bohlenheizungssystem ausgebildetes Heizungssystem in einer der vorstehend beschriebenen Varianten aufweist. In diesem Fall ist die Einbaubohle das beheizbare Arbeitsaggregat; bei der Baumaschine handelt es sich um einen Straßenfertiger. Dieser Anwendungsfall ist deshalb besonders vorteilhaft, weil das Bohlenheizungssystem eines Straßenfertigers eine hohe Heizleistung erfordert.

Allgemein bezieht sich die Erfindung auch auf eine selbstfahrende Baumaschine mit einem Motor, einem von dem Motor angetriebenen elektrischen Generator als interner Stromquelle der Baumaschine sowie mit einem Heizungssystem in einer vorstehend beschriebenen Varianten. Bei der selbstfahrenden Baumaschine kann es sich beispielsweise um eine Walze, einen Bagger oder um ein Transportfahrzeug beispielsweise für heißen Asphalt handeln (Arbeitsaggregat: beheiztes Reservoir für Asphalt). Vorzugsweise handelt es sich um einen Straßenfertiger, und das beheizbare Arbeitsaggregat ist eine Einbaubohle des Straßenfertigers.

Im Fall eines Straßenfertigers als Baumaschine könnte sich der Stromanschluss zur Verbindung mit einer externen Stromquelle auf der Einbaubohle befinden, alternativ auf einer Zugmaschine des Straßenfertigers. Denkbar ist auch eine Variante, in der mehrere wahlweise verwendbare Stromanschlüsse vorgesehen sind, von denen einer auf der Einbaubohle und ein anderer auf der Zugmaschine des Straßenfertigers angeordnet ist.

Die Erfindung bezieht sich ferner auf ein Verfahren zum Beheizen eines Arbeitsaggregats einer Baumaschine, wobei die Baumaschine ein Heizungssystem mit einem oder mehreren Heizkreisen mit jeweils mindestens einem elektrischen Heizelement sowie einen Heizverteiler aufweist, wobei der Heizverteiler konfiguriert ist zum Verteilen von Drehstrom auf den einen oder die mehreren Heizkreise. In dem Verfahren erfolgt ein Umschalten einer Schaltvorrichtung von einer ersten Schaltstellung, in der der Heizverteiler elektrisch verbunden ist mit einer internen Stromquelle der Baumaschine, beispielsweise einem Generator und/oder einer Batterie, in eine zweite Schaltstellung, in der der Heizverteiler elektrisch verbunden ist mit einem Stromanschluss zu einer externen Stromquelle. Wie vorstehend erläutert, bietet dies den Vorteil, dass die Heizkreise auch dann mit elektrischer Energie versorgt werden können, wenn die interne Stromquelle der Baumaschine nicht zur Verfügung steht oder abgeschaltet ist, beispielweise bei einem Transport der Baumaschine.

Der Stromanschluss zur externen Stromquelle kann ein Drehstromstecker oder eine Drehstromsteckdose sein. Über einen solchen, oft auch Starkstrom-Anschluss genannten, Stromanschluss können genügend große Ströme zum Beheizen des Arbeitsaggregats einer Baumaschine bereitgestellt werden.

Bei der externen Stromquelle kann es sich um eine Stromversorgung eines Transportfahrzeugs zum Transportieren der Baumaschine handeln, beispielsweise einen Tieflader. Diese Variante hat den Vorteil, dass das beheizbare Arbeitsaggregat der Baumaschine bereits während des Transports der Baumaschine zur Baustelle aufgeheizt und auf Betriebstemperatur gebracht werden kann, so dass das Arbeitsaggregat und die Baumaschine sofort beim Eintreffen auf der Baustelle betriebsbereit sind und so früh wie möglich ihre Arbeit aufnehmen können.

Bei der internen Stromquelle kann es sich beispielsweise um einen Generator oder eine Batterie handeln, die an oder auf der Baumaschine angeordnet sind.

Wie bereits erläutert, handelt es sich bei der Baumaschine vorzugsweise um einen Stra-βenfertiger, und das beheizbare Arbeitsaggregat ist in diesem Fall eine beheizbare Einbaubohle des Straßenfertigers, mittels derer heißes Einbaumaterial (Asphalt) verlegt und geglättet werden kann.

Im Folgenden wird ein vorteilhaftes Ausführungsbeispiel der Erfindung anhand einer Zeichnung näher erläutert. Im Einzelnen zeigen
- Fig. 1: ein Ausführungsbeispiel des Heizungssystems auf einem Straßenfertiger mit einer Einbaubohle,
- Fig. 2: ein Ausführungsbeispiel einer Einbaubohle als Arbeitsaggregat einer Baumaschine und
- Fig. 3: eine schematische Darstellung eines erfindungsgemäßen Heizungssystems.

Gleiche Komponenten sind in den Figuren durchgängig mit gleichen Bezugszeichen versehen.

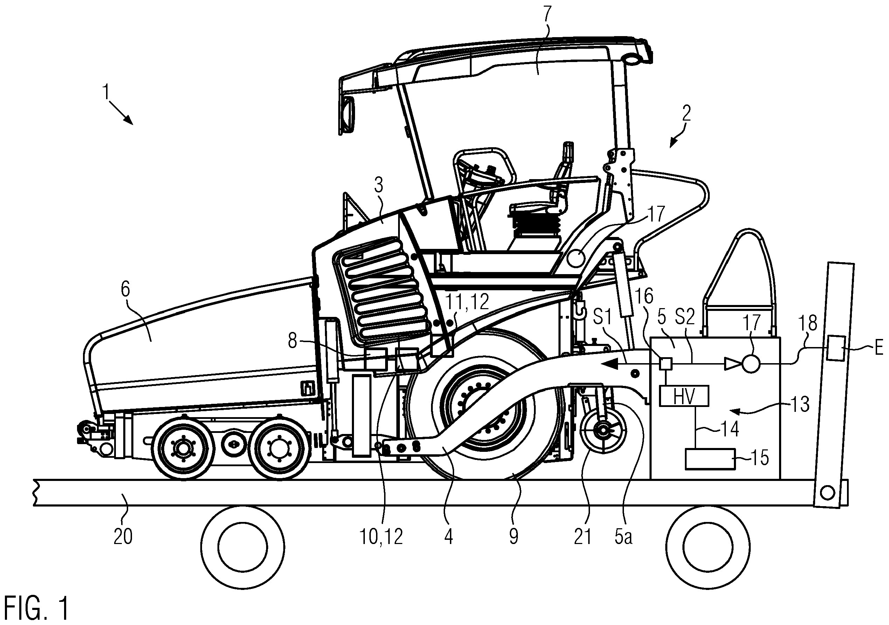

Fig. 1 zeigt eine Baumaschine 1 in Form eines Straßenfertigers. Der Straßenfertiger 2 weist eine Zugmaschine 3 und eine von der Zugmaschine 3 über Bohlenholme 4 geschleppte Einbaubohle 5 auf. Auf der Zugmaschine 3 des Straßenfertigers 2 befinden sich ein Gutbunker 6 zur Aufnahme von Einbaumaterial, ein Bedienstand 7, ein Motor 8 zum Antreiben eines Fahrwerks 9, ein vom Motor 8 angetriebener elektrischer Generator 10 sowie eine vom Generator 10 aufladbare Batterie 11. Der Generator 10 und die Batterie 11 können dabei jeweils als interne Stromquellen 12 bezeichnet werden, da sie sich an oder auf der Baumaschine 1 befinden.

Die Einbaubohle 5 ist in diesem Fall ein beheizbares Arbeitsaggregat der Baumaschine 1. Auf der Einbaubohle 5 ist ein Heizungssystem 13 angeordnet. Es umfasst einen oder mehrere Heizkreise 14 mit jeweils einem oder mehreren elektrischen Heizelementen 15. Die elektrischen Widerstands-Heizelemente 15 dienen diese zum Beheizen der Einbaubohle 5.

Das Heizungssystem 13 umfasst einen Heizverteiler HV, der eingerichtet ist zum Verteilen von Drehstrom auf den einen oder die mehreren Heizkreise 14. Sollte insgesamt nur ein Heizkreis 14 vorgesehen sein, so ist der Heizverteiler 14 schlicht dazu eingerichtet, die elektrische Energie koordiniert dem Heizkreis 14 zuzuführen.

Das Heizungssystem 13 umfasst ferner eine Schaltvorrichtung 16. Die Schaltvorrichtung 16 ist umschaltbar zwischen zumindest zwei Schaltstellungen S1, S2. In einer ersten Schaltstellung S1 symbolisiert in Fig. 1 durch einen nach links weisenden Pfeil, verbindet die Schaltvorrichtung 16 den Heizverteiler HV elektrisch mit einer der internen Stromquellen 12 der Baumaschine 1. In einer zweiten Schaltstellung S2 verbindet die Schaltvorrichtung 16 den Heizverteiler HV elektrisch mit einem Stromanschluss 17 des Heizungssystems 13.

Über den Stromanschluss 17 ist das Heizungssystem 13 zum Beheizen des Arbeitsaggregats 5 mit einer externen, d.h. nicht zur Baumaschine 1 gehörenden Stromquelle E elektrisch verbindbar. Zu diesem Zweck wird z.B. ein Kabel 18 verwendet, um eine elektrische Verbindung zwischen dem Stromanschluss 17 und der externen Stromquelle E herzustellen. Beim Stromanschluss 17 kann es sich um einen Drehstromstecker oder um eine Drehstromsteckdose handeln.

Fig. 1 zeigt eine Ausführungsform, bei der es sich bei der externen Stromquelle E um eine Stromversorgung oder um einen Stromanschluss eines Transportfahrzeugs 20 zum Transportieren der Baumaschine 1 handelt, beispielsweise um einen Tieflader oder Sattelschlepper. Diese Variante bietet den Vorteil, dass die Einbaubohle 5 als Arbeitsaggregat der Baumaschine 1 bereits während des Transports des Straßenfertigers 2 auf dem Transportfahrzeug 20 erwärmt werden kann, wenn die Schaltvorrichtung 16 in ihrer zweiten Schaltstellung S2 ist und der Stromanschluss 17 mit der externen Stromquelle E verbunden wird.

Alternativ kann es sich bei der externen Stromquelle E auch um eine Ladesäule, beispielsweise um eine Schnellladesäule, handeln.

Allgemein bietet die Erfindung den Vorteil, dass das Arbeitsaggregat 5 der Baumaschine 1 über den Stromanschluss 17 mit einer Vielzahl verschiedener externer Stromquellen E verbindbar ist, beispielsweise während des Transports (wie in Fig. 1 gezeigt), aber auch während des Stillstands vor oder auf einer Baustelle.

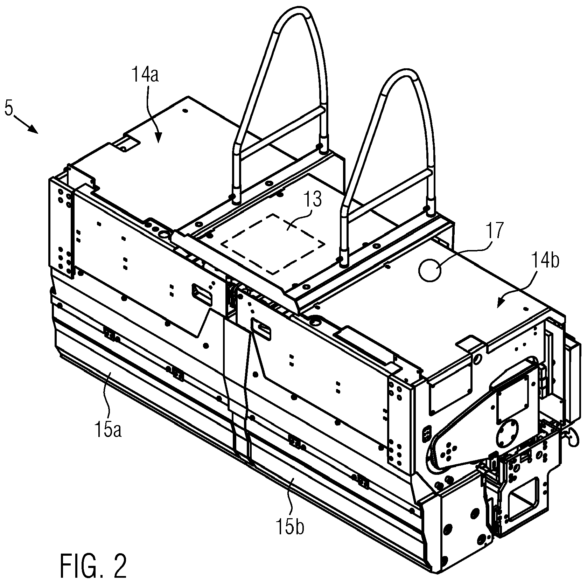

Fig. 2 zeigt in perspektivischer Ansicht ein Ausführungsbeispiel einer beheizbaren Einbaubohle 5 als Beispiel für ein Arbeitsaggregat einer Baumaschine 1, in diesem Fall eines Straßenfertigers 2. Schematisch ist dargestellt, dass die Einbaubohle 5 zwei Heizkreise 14a, 14b aufweist, wobei einer (14a) für das Beheizen der in Fahrtrichtung rechten Bohlenhälfte mittels mindestens eines elektrischen Heizelements 15a und der andere (14b) für das Beheizen einer in Fahrtrichtung linken Bohlenhälfte mittels mindestens eines elektrischen Heizelements 15b konfiguriert ist. Auf der Einbaubohle 5 befindet sich das Heizungssystem 13 sowie ein Stromanschluss 17 zur Verbindung mit einer externen Stromquelle E. Alternativ oder zusätzlich kann, wie in Fig. 1 angedeutet, ein solcher Stromanschluss 17 des Heizungssystems 13 auch auf der Zugmaschine 3 des Straßenfertigers 2 angeordnet sein.

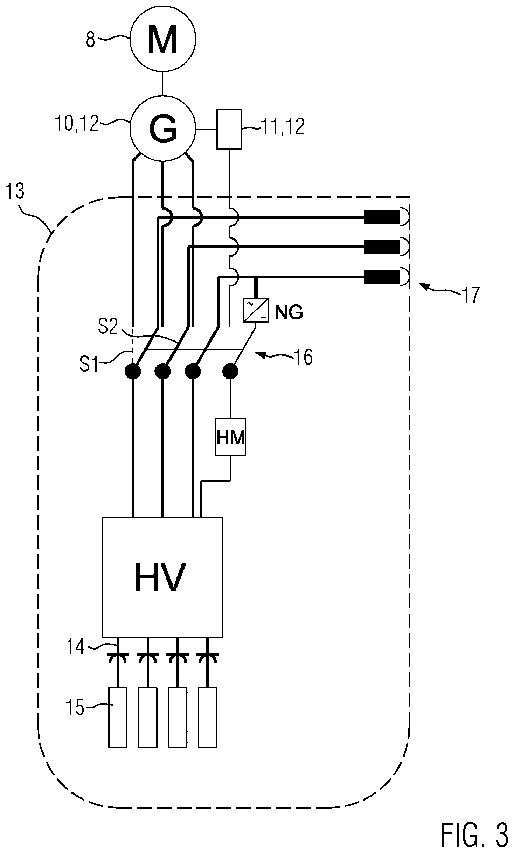

Fig. 3 zeigt in schematischer Darstellung ein Ausführungsbeispiel eines Heizungssystems 13. Die Systemgrenze des inneren Kerns des Heizungssystems 13 ist in Fig. 3 mit einer unterbrochenen Linie angedeutet. Das Heizungssystem 13 weist den Heizverteiler HV auf, der hier beispielhaft zur Verteilung von Drehstrom auf vier Heizkreise 14 mit jeweils mindestens einem Heizelement 15 konfiguriert ist. Mit durchgezogenen Linien ist dargestellt, dass sich die Schaltvorrichtung 16 in ihrer zweiten Schaltstellung S2 befindet. In dieser zweiten Schaltstellung S2 verbindet die Schaltvorrichtung 16 den Heizverteiler HV elektrisch mit dem Stromanschluss 17, über den das Heizungssystem 13 mit einer externen Stromquelle E verbindbar ist. Der Stromanschluss 17 ist im vorliegenden Beispiel als Drehstrom-Stecker oder Drehstrom-Steckdose 17 ausgebildet.

Angedeutet ist in Fig. 3 die erste Schaltstellung S1 der Schaltvorrichtung 16, in der die Schaltvorrichtung 16 den Heizverteiler HV elektrisch verbindet mit der internen Stromquelle 12 der Baumaschine 1, im vorliegenden Ausführungsbeispiel dem Generator 10 der Baumaschine, der über einen Motor 8 angetrieben wird. In jeder der beiden Schaltstellungen S1, S2 dient die Schaltvorrichtung 16 zur Zuführung von Drehstrom entweder von einer internen Stromquelle 12 oder von einer externen Stromquelle E zum Heizverteiler HV.

In Fig. 3 ist des Weiteren eine Heizungssteuerung HM vorgesehen. Sie dient dazu, den Heizverteiler HV geeignet anzusteuern, beispielsweise für einen getakteten Betrieb der einzelnen Heizkreise 14. Die Heizungssteuerung HM wird unabhängig von der Schaltstellung der Schaltvorrichtung 16 mit elektrischer Energie versorgt. Zu diesem Zweck umfasst das Heizungssystem 13 ein Netzgerät NG. Dieses ist zwischen dem Stromanschluss 17 und der Heizungssteuerung angeordnet. Die Schaltvorrichtung 16 ist dazu konfiguriert, die Heizungssteuerung HM in der ersten Schaltstellung S1 mit einer Batterie 11 der Baumaschine 1 zu verbinden, in der zweiten Schaltstellung S2 hingegen mit dem Netzgerät NG. Das Netzgerät NG kann dazu konfiguriert sein, die Spannung des vom Generator 10 oder der externen Stromquelle E bezogenen Spannung beispielsweise von 380V oder 400V herunterzuregeln auf eine für den Betrieb der Heizungssteuerung HM geeignete Spannung von beispielsweise 12V oder 24V.

Ausgehend von den dargestellten Ausführungsbeispielen können das Heizungssystem, die Baumaschine 1 und das Verfahren in vielfacher Weise geändert werden. Bei der externen Stromquelle E kann es sich um eine standardisierte öffentliche Versorgungseinrichtung handeln, wie beispielsweise einen 32A- einen 63A- oder einen 125A-Drehstromanschluss in einem Stromkasten, oder um eine (Schnell-)Ladesäule, die auch zum Laden von Elektro-Kraftfahrzeugen geeignet ist. Die Heizungssteuerung kann ferner dazu konfiguriert sein, eine Isolationsüberwachung, eine Temperaturregelung, eine Taktung und/oder eine Leistungsbegrenzung des Heizungssystems 13 zur Verfügung zu stellen. Als beheizbares Arbeitsaggregat 5 der Baumaschine 1 kommt im Fall eines Straßenfertigers 2 alternativ zur Einbaubohle auch ein Schneckenlagerbock 5a in Frage, an dem eine Querverteilerschnecke 21 des Straßenfertigers 2 gelagert ist, siehe Fig. 1.

Denkbar ist es, dass das Heizungssystem 13 und/oder die Heizungssteuerung HM dazu eingerichtet sind, dass mit überschüssigem Strom von der externen Stromquelle E, der zum Beheizen des Arbeitsaggregats 5 nicht benötigt wird, der Akku 11 der Baumschine 1 geladen wird.

## Patentansprüche

1. Heizungssystem (13) für ein beheizbares Arbeitsaggregat (5) einer Baumaschine (1), wobei das Heizungssystem (13) aufweist: einen oder mehrere Heizkreise (14) mit jeweils mindestens einem elektrischen Heizelement (15), und einen Heizverteiler (HV), wobei der Heizverteiler (HV) konfiguriert ist zum Verteilen von Drehstrom auf den einen oder die mehreren Heizkreise (14), **gekennzeichnet durch** eine Schaltvorrichtung (16), die dazu eingerichtet ist, den Heizverteiler (HV) in einer ersten Schaltstellung (S1) mit einer internen Stromquelle (12) der Baumaschine (1) und in einer zweiten Schaltstellung (S2) mit einem Stromanschluss (17) zur Verbindung mit einer externen Stromquelle (E) zu verbinden.

2. Heizungssystem nach Anspruch 1, **dadurch gekennzeichnet, dass** der Stromanschluss (17) ein Drehstrom-Stecker oder eine Drehstrom-Steckdose ist.

3. Heizungssystem nach einem der vorangehenden Ansprüche, **dadurch gekennzeichnet, dass** der Heizverteiler (HV) in der zweiten Schaltstellung (S2) elektrisch von der internen Stromquelle (12) getrennt ist.

4. Heizungssystem nach einem der vorangehenden Ansprüche, **dadurch gekennzeichnet, dass** das Heizungssystem (13) eine Heizungssteuerung (HM) aufweist.

5. Heizungssystem nach Anspruch 4, **dadurch gekennzeichnet, dass** die Heizungssteuerung (HM) in der ersten Schaltstellung (S1) der Schaltvorrichtung (16) mit der internen Stromquelle (12) der Baumaschine (1) und in der zweiten Schaltstellung (S2) mit dem Stromanschluss (17) verbunden ist.

6. Heizungssystem nach einem der Ansprüche 4 oder 5, **dadurch gekennzeichnet, dass** zwischen dem Stromanschluss (17) und der Heizungssteuerung (HM) ein Netzgerät (NG) angeordnet ist.

7. Einbaubohle (5) für einen Straßenfertiger (2), wobei die Einbaubohle (5) ein als Bohlenheizungssystem ausgebildetes Heizungssystem (13) nach einem der Ansprüche 1 bis 6 aufweist.

8. Selbstfahrende Baumaschine (1) mit einem Motor (8), einem vom Motor (8) angetriebenen elektrischen Generator (10) als interner Stromquelle (12) sowie mit einem Heizungssystem (13) nach einem der Ansprüche 1 bis 6.

9. Selbstfahrende Baumaschine nach Anspruch 8, wobei die Baumaschine (1) ein Straßenfertiger (2) ist und das beheizbare Arbeitsaggregat (5) eine Einbaubohle des Straßenfertigers (2) ist.

10. Selbstfahrende Baumaschine nach Anspruch 9, wobei der Stromanschluss (17) auf der Einbaubohle (5) oder auf einer Zugmaschine (3) des Straßenfertigers (2) angeordnet ist.

11. Verfahren zum Beheizen eines Arbeitsaggregats (5) einer Baumaschine (1), wobei die Baumaschine ein Heizungssystem (13) mit einem oder mehreren Heizkreisen (14) mit jeweils mindestens einem elektrischen Heizelement (15) sowie einen Heizverteiler (HV) aufweist, wobei der Heizverteiler (HV) konfiguriert ist zum Verteilen von Drehstrom auf den einen oder die mehreren Heizkreise (14), **gekennzeichnet durch** eine Umschalten einer Schaltvorrichtung (16) von einer ersten Schaltstellung (S1), in der der Heizverteiler (HV) elektrisch verbunden ist mit einer internen Stromquelle (12) der Baumaschine (1), in eine zweite Schaltstellung (S2), in der der Heizverteiler (HV) elektrisch verbunden ist mit einem Stromanschluss (17) zu einer externen Stromquelle (E).

12. Verfahren nach Anspruch 11, **dadurch gekennzeichnet, dass** der Stromanschluss (17) ein Drehstrom-Stecker oder eine Drehstrom-Steckdose ist.

13. Verfahren nach Anspruch 11 oder 12, **dadurch gekennzeichnet, dass** die externe Stromquelle (E) eine Stromversorgung eines Transportfahrzeugs (20) zum Transportieren der Baumaschine (1) ist.

14. Verfahren nach einem der Ansprüche 11 bis 13, **dadurch gekennzeichnet, dass** die interne Stromquelle (12) ein Generator (10) oder eine Batterie (11) ist.

15. Verfahren nach einem der Ansprüche 11 bis 14, **dadurch gekennzeichnet, dass** die Baumaschine (1) ein Straßenfertiger (2) ist und das beheizbare Arbeitsaggregat (5) eine Einbaubohle des Straßenfertigers (2) ist.
